# EUROPEAN PATENT APPLICATION

(11) **EP 4 404 098 A1**
(43) Date of publication of application: **24.07.2024**
(21) Application number: 24150554.4
(22) Date of filing: 05.01.2024
(51) Int. Cl.: G06F 30/394, G06F 30/27

(54) **AUTOMATIC LAYOUT ROUTING FLOW FOR PACKAGE SUBSTRATE DESIGN EVALUATION**

(30) Priority: 18.01.2023 US 202363480316 P; 25.12.2023 US 202318395633
(71) Applicant: MediaTek Inc., Hsin-Chu 300 (TW)
(72) Inventor: HSU, Chih-Jung, 30078 Hsinchu City (TW); LIEN, Chen, 30078 Hsinchu City (TW); TU, Deng-Yao, 30078 Hsinchu City (TW); CHEN, Po-Yang, 30078 Hsinchu City (TW); FANG, Guan-Qi, 30078 Hsinchu City (TW); CHANG, Shu-Huan, 30078 Hsinchu City (TW); CHEN, Yi-Hung, 30078 Hsinchu City (TW); SU, Yao-Chun, 30078 Hsinchu City (TW); CHEN, Yu-Yang, 30078 Hsinchu City (TW)
(74) Representative: Hoefer & Partner Patentanwälte mbB

(57) **Abstract**

A layout routing method includes determining a routing pattern according to a swapping rule, a via pattern, area constraints and pin locations (S201); optimizing swapping in differential pairs according to the routing pattern (S202); extracting features of each routing net to obtain extracted features (S203); using an unsupervised algorithm to generate different routing groups according to the extracted features (S204) ; and determining a routing order of the routing groups according to complex features of the routing groups (S205).

## Description

### Cross Reference to Related Applications

This application claims the benefit of U.S. Provisional Application No. 63/480, 316, filed on January 18th, 2023. The content of the application is incorporated herein by reference.

### Background

The invention relates to layout routing, and in particular, to a method of auto-routing. The prior art layout uses manual routing. During the early development stage of large-scale AI (artificial intelligence) /HPC (High Performance Computing)/networking switch products, it took weeks for layout engineers to evaluate the package substrate routing feasibility, thus was time consuming and wasteful of human resources.

### Summary

A method and a non-transitory computer-readable medium according to the invention are defined in the independent claims. The dependent claims define preferred embodiments thereof. According to an embodiment of the invention, a layout routing method includes determining a routing pattern according to a swapping rule, a via pattern, area constraints and pin locations; optimizing swapping in differential pairs according to the routing pattern; extracting features of each routing net to obtain extracted features; using an unsupervised algorithm to generate different routing groups according to the extracted features; and determining a routing order of the routing groups according to complex features of the routing groups.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a flowchart of an integrated auto layout routing method according to an embodiment of the present invention.
FIG. 2 is a flowchart of Step S100 of the integrated auto layout routing method in FIG. 1.
FIG. 3 shows a result after performing Step S100 of the integrated auto layout routing method in FIG. 1.
FIG. 4 is a flowchart of Step S200 of the integrated auto layout routing method in FIG. 1.
FIG. 5 shows a result after performing clustering and determining a routing order in FIG. 4.
FIG. 6 shows taking a failed net as a boundary for dividing the original group into two sub-groups according to an embodiment of the present invention.
FIG. 7 shows a computer system for performing an integrated auto layout routing method.

### Detailed Description

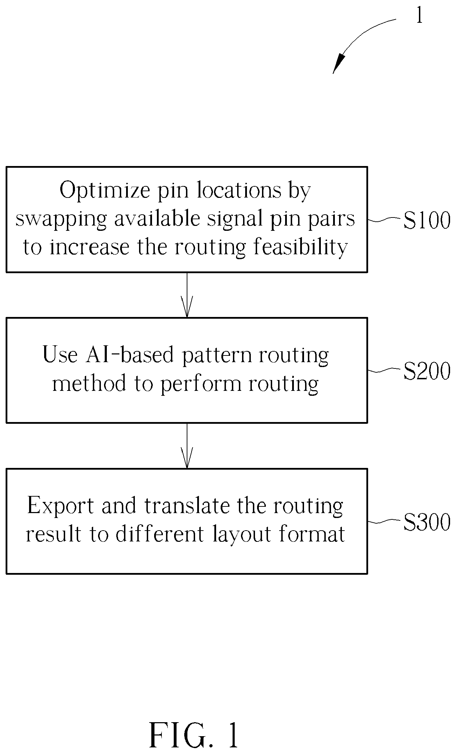

Routing is the process of creating physical connections between signal pins that provide connections to the integrated circuits. FIG. 1 is a flowchart of an integrated auto layout routing method 1 according to an embodiment of the present invention. The integrated auto layout routing method 1 can save human effort on routing and layout evaluation by optimizing pin allocation and using AI (artificial intelligence) -based pattern routing method to perform routing. The integrated auto layout routing method 1 comprises Steps S100 to S300. Any reasonable step change or adjustment is within the scope of the disclosure. Steps S100 to S300 are explained as follows:

| | |
|---|---|
| Step S100: | Optimize pin locations by swapping available signal pin pairs to increase the routing feasibility; |
| Step S200: | use AI-based pattern routing method to perform |
| | routing; |
| Step S300: | export and translate the routing result to different layout format. |

In order to improve the layout routing feasibility before routing, pin allocation optimization is crucial. In Step S100, calculate the cost of every layer before and after swapping to determine whether to swap the pin locations or not, and then swap differential pairs according to the cost. The cost can be determined according to the cross angle degree of every two fly-lines and the number of cross fly-lines. Fly-lines are virtual connections between pins which provide a rough idea of all the traces that will have to be created to complete those connections.

In Step S200, apply an AI-based pattern routing method, which optimizes swapping in differential pairs according to the determined routing pattern and then use unsupervised clustering algorithms to generate different routing groups according to the features extracted from the routing nets. After generating different routing groups, determine a routing order according to complexity of the routing groups and perform routing in sequence. The more complex the group, the earlier the routing will be performed. By using this method, the appearances of detours can be reduced and the routing path distance can be reduced. If the routing fails, perform the rip-up rerouting algorithm to fix the fail net.

In Step S300, the routing result can be exported and translated to different layout format for user to input.

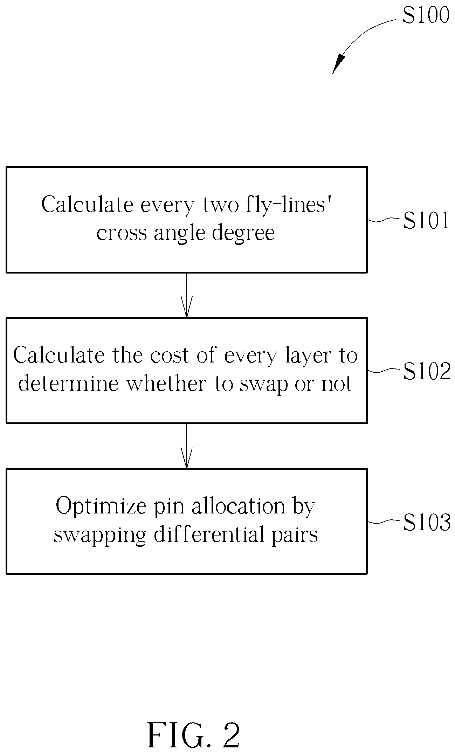

FIG. 2 is a flowchart of Step S100; Step S100 applies a Heuristic-based pin location swap algorithm. Step S100 is performed before Step S200 in order to improve the layout routing feasibility by optimizing pin allocation. Step S100 improves routing feasibility for routers by calculating cost of allocation and swap the pin pairs. S100 may include Steps S101 to S103. Any reasonable step change or adjustment is within the scope of the disclosure. Steps S101 to S103 are explained as follows:

| | |
|---|---|
| Step S101: | Calculate every two fly-lines' cross angle degree; |
| Step S102: | calculate the cost of every layer to determine whether to swap or not; |
| Step S103: | optimize pin allocation by swapping differential pairs. |

In Step S102, calculate the cost of every layer. The cost is determined according to the cross angle degree of every two fly-lines and the number of cross fly-lines. If two fly-lines cross, which indicates the routing path would be longer, the cost will be higher; if two fly-lines are in parallel, the cost will be lower. In Step S103, calculate the midpoints of every differential pair's bump-out and ball location to get the approximate routing direction, and then determine the differential pair locations and swap differential pairs according to the cost.

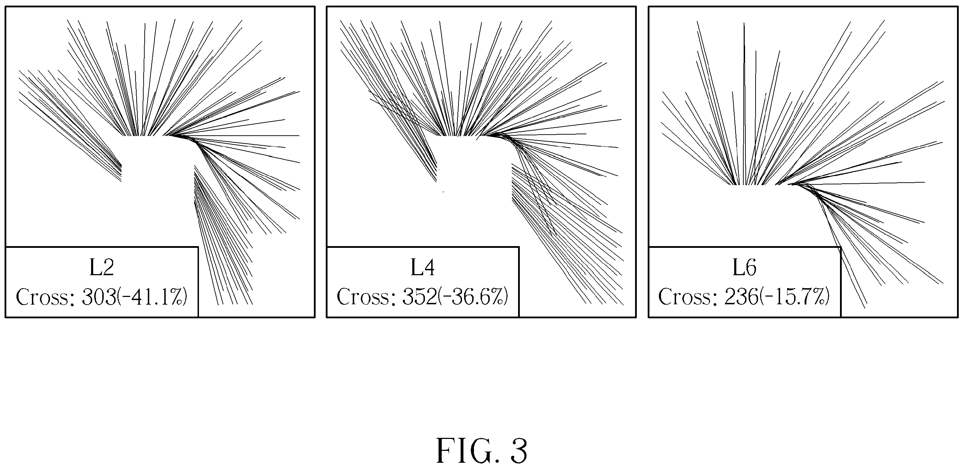

FIG. 3 shows a result after performing Step S100 of the method 1. It shows the result by layer. L2, L4, L6 represents layer 2, layer 4, layer 6 respectively. The cross number indicates the number of the cross fly-lines and the percentage indicates the percentage of cross fly-lines decrease after performing pin swaps. For example, -41.1% in FIG. 3 indicates the number of the cross fly-lines in layer 2 has been reduced by 41.1% compared to the original and the number of the cross fly-lines in layer 2 is 303.

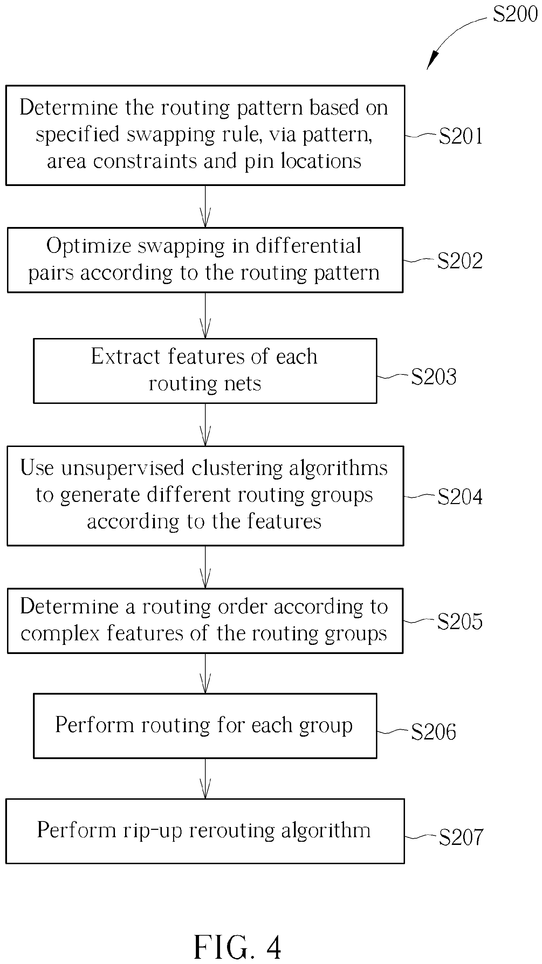

FIG. 4 is a flowchart of Step S200 of using AI-based pattern routing method. Step S200 performs routing based on available router in commercial EDA (electronic design automation) layout tools, and it can help to find the feasible path of routing and save human resource. Step S200 can be used with different routing algorithm, and may include Steps S201 to S207. Any reasonable step change or adjustment is within the scope of the disclosure. Steps S201 to S207 are explained as follows:

| | |
|---|---|
| Step S201: | Determine the routing pattern based on specified swapping rule, via pattern, area constraints and pin locations; |
| Step S202: | optimize swapping in differential pairs according to the routing pattern; |
| Step S203: | extract features of each routing net; |
| Step S204: | use unsupervised clustering algorithms to generate different routing groups according to the features; |
| Step S205: | determine a routing order according to complex features of the routing groups; |
| Step S206: | perform routing for each group; |
| Step S207: | perform rip-up rerouting algorithm. |

In Step S201, the via pattern shows the locations and traces of vias which are electrical connections between layers. The pin locations are locations of the bump-outs and ball pins.

In Step S203, the features comprise start point Vs, target point Vt, breakout point Vb, vector (Vs, Vt), vector (Vs, Vb), vector (Vt, Vb), Manhattan distance between breakout point Vb and target point Vt, which is a sum of a distance between x coordinates of the breakout point Vb and target point Vt and a distance between y coordinates of the breakout point Vb and target point Vt, and vectors (Vt, Vb) of adjacent nets.

In Step S204, the unsupervised clustering algorithms can be K-means or Mean Shift.

Step S205 is performed after generating different routing groups. The complex features of the routing groups comprise the number of nets, the number of fanout crossing points, and the total fanout trace length. Fanouts are traces from a device lands to adjacent via. In this step, determine the complexity of the routing groups according to the complex features, and then assigning a higher priority to a more complex routing group. The more complex the group, the earlier the routing will be performed. In Step S206, route each group in the order determined in Step S205.

In Step S207, perform the rip-up rerouting algorithm when routing fails. The router can fail by not connecting terminals that should be connected or by mistakenly connecting two terminals that should not be connected. The rip-up rerouting algorithm comprises reducing boundary errors of clustering by using a convex hull, swapping pins in failed differential pairs to generate a different layout pattern and dividing the failed routing group into two sub-groups by a failed routing net. After dividing the failed routing group into two sub-groups, reroute the sub-groups.

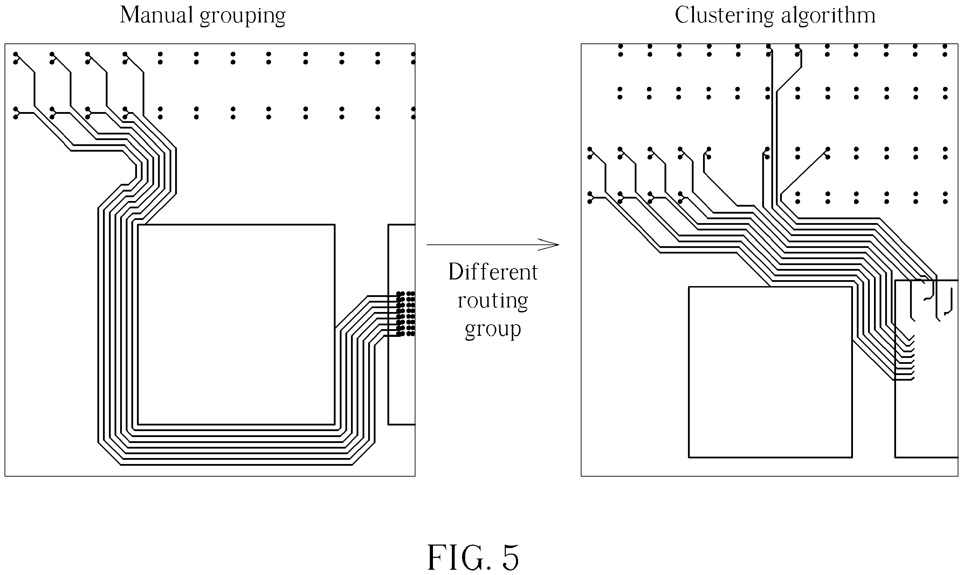

FIG. 5 shows a result after performing clustering and determining the routing order in FIG. 4. The left side of FIG. 5 shows a result of manual grouping and the right side of FIG. 5 shows a result after clustering and routing in the determined order. By using clustering algorithms to generate different routing groups and assigning a higher priority to a more complex routing group, the appearances of detours can be reduced and the routing path distance can be reduced.

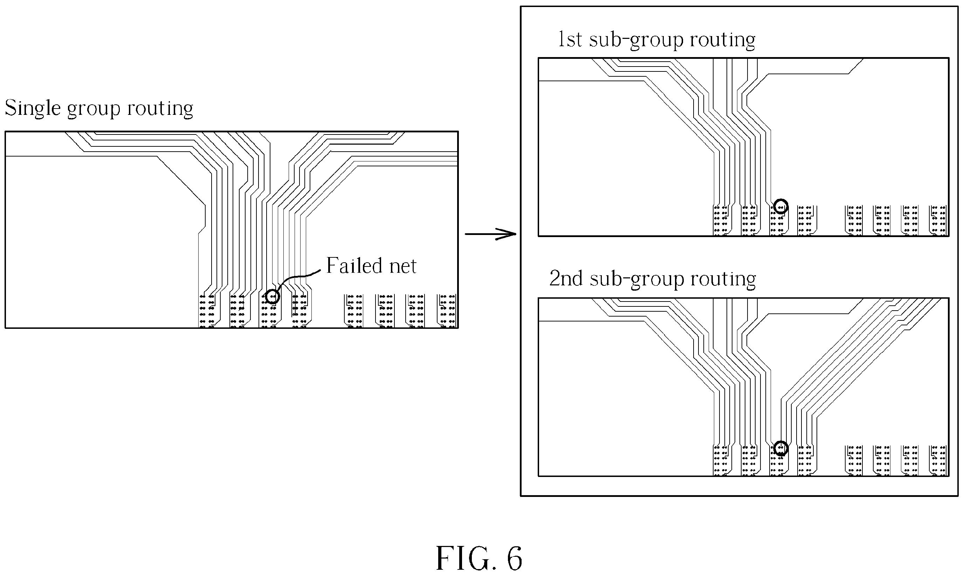

FIG. 6 shows taking the failed net as a boundary for dividing the original group into two sub-groups. The left side of FIG. 6 shows a result of the original group with a failed net, the failed net in FIG. 6 has no routing resources. The right side of FIG. 6 shows a result of rerouting the sub-groups. After dividing the original group into sub-groups, reroute the sub-groups and the failed net is fixed.

After finishing the routing, perform Step S300 to export the routing result. Since the format of the routing may be different from the format of the layout, in Step S300, it can translate the routing result to a different layout format and export the translated routing result for user to input.

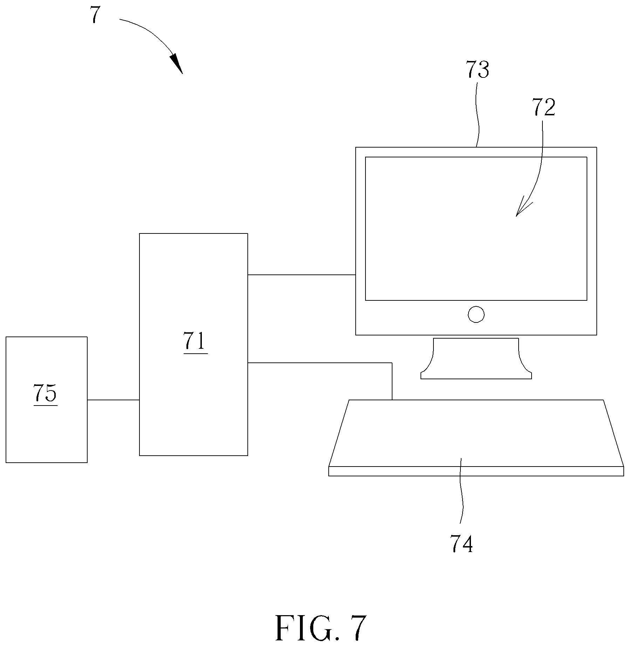

FIG. 7 shows a computer system for performing an integrated auto layout routing method. The computer system 7 includes a central processing unit (CPU) 71, a display device 73, an input device 74, and a non-transitory computer-readable medium 75. The display device 73, the input device 74 and the non-transitory computer-readable medium 75 are connected to the central processing unit (CPU) 71. The non-transitory computer-readable medium 75 storing computer-executable instructions thereon, that when executed by the central processing unit (CPU) 71, cause the central processing unit (CPU) 71 to perform the integrated auto layout routing method 1 and the routing result may be displayed on a graphical user interface (GUI) 72 on the display device 73. Users may interact with the graphical user interface 72 and interact with the routing result using the input device 74. The input device 74 can be a mouse, a touch pad or a keyboard.

By using integrated auto layout routing method 1 to route, compared to manual routing, human effort can be saved, and the layout feasibility evaluation time can be reduced. This method provides a reliable routing result, and allows generating a different layout for a different platform.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A layout routing method comprising:
determining a routing pattern according to a swapping rule, a via pattern, area constraints and pin locations (S201);
optimizing swapping in differential pairs according to the routing pattern (S202);
extracting features of each routing net to obtain extracted features (S203);
using an unsupervised algorithm to generate different routing groups according to the extracted features (S204); and determining a routing order of the routing groups according to complex features of the routing groups (S205).

2. The method of Claim 1, wherein the features of each routing net comprise:
a start point;
a target point;
a breakout point;
a vector from the start point to the target point;
a vector from the start point to the breakout point;
a vector from the target point to the breakout point;
a Manhattan distance between the breakout point and the target point; and
adjacent vectors each from a corresponding target point to a corresponding breakout point.

3. The method of Claim 1 or 2, wherein the complex features of the routing groups comprise:
number of nets;
number of fanout crossing points; and
a total fanout trace length.

4. The method of any one of Claims 1 to 3, wherein determining the routing order of the routing groups according to the complex features of the routing groups comprises assigning a higher priority to a more complex routing group.

5. The method of any one of Claims 1 to 4, further comprising optimizing the pin locations by swapping differential pairs.

6. The method of any one of Claims 1 to 5, further comprising performing routing for each group in the determined routing order (S206) .

7. The method of any one of Claims 1 to 6, further comprising performing a rip-up rerouting algorithm when routing fails (S207) .

8. The method of Claim 7, wherein performing the rip-up rerouting algorithm comprises reducing boundary errors of clustering by using a convex hull.

9. The method of Claim 7 or 8, wherein performing the rip-up rerouting algorithm comprises swapping pins in failed differential pairs to generate a different layout pattern.

10. The method of any one of Claims 7 to 9, wherein performing the rip-up rerouting algorithm comprises:
dividing the failed routing group into two sub-groups along a failed routing net; and
rerouting the two sub-groups.

11. The method of any one of Claims 1 to 10, further comprising exporting a routing result.

12. The method of any one of Claims 1 to 11, further comprising translating a routing result to a layout format.

13. The method of Claim 12, further comprising exporting the translated routing result.

14. A non-transitory computer-readable medium storing computer-executable instructions thereon, that when executed by a processor, cause the processor to perform the method steps as defined in any one of Claims 1 to 13.
